# EUROPEAN PATENT SPECIFICATION

(11) **EP 3 361 179 B1**
(45) Date of publication and mention of the grant of the patent: **15.07.2020**
(21) Application number: 18156572.2
(22) Date of filing: 13.02.2018
(51) Int. Cl.: F24H 4/02, F24H 9/02, F24H 8/00

(54) **HIGH-EFFICIENCY HEATING APPARATUS**
HOCH-EFFIZIENT HEIZUNGSGERÄT
APPAREIL DE CHAUFFAGE À HAUT RENDEMENT

(30) Priority: 13.02.2017 IT 201700015408
(43) Date of publication of application: 15.08.2018
(73) Proprietor: Gas Point S.R.L., 42041 Brescello (IT)
(72) Inventor: LOVASCIO, Nicola, 42041 BRESCELLO (IT); RASTELLI, Raffaello, 42041 BRESCELLO (IT); ZATTI, Claudio, 42041 BRESCELLO (IT)
(74) Representative: Bergadano, Mirko

(56) References cited:
- EP-A2- 0 127 939
- EP-A2- 2 273 203
- WO-A1-2014/083440
- DE-A1- 2 822 808

## Description

The invention relates to a one-piece heating apparatus obtained through the integration of a conventional boiler (namely, a non-condensing boiler), preferably provided with an atmospheric burner, and of an air-water heat pump.

Preferably, though not necessarily, the apparatus is provided with one single air feeding duct and with one single fume draining duct.

As explained more in detail below, the apparatus has efficiencies that can be compared to those of a condensing boiler, though without the need to condense the humidity contained in the combustion products and, therefore, without the need to dispose of the relative condensate.

As it is known, a while ago the European Union set the following important goals concerning the energy field, which must reached within 2020 (and with respect to the data collected in 1990):
∘ 20% cut in greenhouse gas emissions;
∘ 20% final energy consumption from renewable sources.

The principles set forth by the relative directives were followed by a series of rules.

Furthermore, as it is known, the heating systems used in Europe are basically based on the use of water as carrier for the distribution of heat to the terminals heating the rooms.

The water heating systems (boilers) used both in autonomous heating systems (i.e. systems used to heat single housing units) and in centralized heating systems (i.e. systems used to heat a plurality of housing units) are mainly operated by a gaseous fuel (mainly natural gas, also known as methane, and, to a smaller extent, liquefied petroleum gas - propane and butane).

Moving on to the description of the most common apparatuses, the following two main categories can be identified:

### Conventional boilers:

∘ They are provided with so-called atmospheric burners, namely burners that get the air needed for the combustion from the surrounding atmosphere, partly thanks to the air dragged into the Venturi tubes provided therein by the gas injected into the Venturi tubes themselves (the so-called primary air) and partly thanks to the natural convection of the burning combustion products generated by the burner itself, which, by flowing upwards, determine a natural suction of air in the space surrounding the burner (the so-called secondary air).
∘ These boilers are provided with non-condensing exchangers. Namely, with an exchange surface that is not sufficient to decrease the temperature of the combustion products until the humidity contained in them condenses, even with temperatures of the system water below 50°C.
∘ These boilers have seasonal efficiencies (according to the measurement method indicated in European Standard EN15502-1/2012) in the range of 75 ÷ 82 %.
∘ They are installed in existing systems in quantities that are deemed to be greater than 50% of the total European amount.

### Condensing boilers:

∘ These boilers are provided with so-called total premix burners, as all the air needed for a clean, perfect and complete combustion is mixed with gas before being introduced into the burner.
∘ They are provided with condensing exchangers. Namely, with an exchange surface that is sufficient to cause the combustion products to reach temperatures below their dew point, with temperatures of the system water below 50°C.
∘ Therefore, in these boilers there is the need to drain the condensate produced into the sewer system.
∘ Furthermore, the fumes must be discharged in impermeable flues, which, in turn, are provided with condensate draining elements.
∘ Their most important advantages are seasonal efficiencies exceeding 86% and NOx emission below 56 mg/kWh.

High-efficiency heating apparatuses for hot water systems of the above described type are disclosed, for example, in EP-A2-0127939, EP-A2-2273203, WO-A1-2014083440 and DE-A1-2822808. Document EP-A2-0127939 discloses a high-efficiency apparatus having the features of the preamble of claim 1.

According to Directive 2009/125/EC and Regulation 813/2013/EU implementing said Directive, as of September 2015 boilers can be sold in Europe only if they have a seasonal efficiency (measured according to European Standard EN15502-1) exceeding 86%.

As a consequence, based on the state of the art, condensing boilers currently are the only ones that can be actually put on the market.

However, the obligation to install condensing boilers even when replacing old boilers in existing systems has led, in many cases, to problems that are complicated and expensive to be solved due to the lack, in the exiting system, of:
- an accessible condensate draining system;
- an impermeable flue.

Therefore, the main object of the invention is to solve the above-mentioned problem by providing a heating apparatus having the seasonal efficiency of a condensing boiler, though without the aforesaid drawbacks caused by the production of condensate and without the need for an impermeable flue where to discharge the combustion products.

More in detail, the main object of the invention is to provide a one-piece heating apparatus obtained through the integration of a conventional boiler, i.e. provided with an atmospheric burner, and of an air-water heat pump, with one single air feeding duct and one single combustion product draining duct.

This novel apparatus is capable of obtaining a seasonal energy efficiency that can be compared to that of condensing boilers, though without the production of condensate in the primary boiler exchanger and, hence, with no need to dispose of the relative condensate.

Furthermore, the apparatus according to the invention does not require the combustion products to be evacuated in an impermeable flue.

Finally, there is no need to dispose of the condensate forming on the evaporator of the heat pump.

The invention will be best understood upon perusal of the following detailed description of a preferred embodiment, which is provided by mere way of non-limiting example, with reference to the single accompanying figure.

In the single figure, number 1000 indicates, as a whole, a possible embodiment of a heating apparatus according to the invention.

The apparatus 1000 comprises a conventional boiler 100 and an air-water heat pump 200.

The apparatus 1000 comprises a casing (INV) containing, on the inside, both the boiler 100 and the heat pump 200.

A partition (SCT) ideally divides the typical components of a conventional boiler 100 from the typical components of an air-water heat pump 200.

The casing (INV), in turn, communicates with the outside through an atmosphere air suction duct (DCT).

First of all, we will describe the convention boiler 100 and how it works.

In this boiler 100, the following elements can be identified:
∘ a primary heat exchanger 10, which permits the exchange of heat between the combustion products coming from a burner 15 (preferably, though nor necessarily, an atmospheric burner) and the water flowing in a hydraulic distribution system 17 comprising a delivery branch 17A and a return branch 17B;
∘ a combustion chamber 18, where there are the aforesaid burner 15 and the aforesaid primary heat exchanger 10;
∘ a water circulation pump 19 for the circulation of water in the hydraulic distribution system 17;
∘ a gas valve 20 with a double shutter (a safety shutter and an operating shutter), which allows gas to flow towards the burner 15 every time there is the need to supply heat to the hydraulic distribution system 17 for the heating of rooms;
∘ a fan 21, which sucks a mixture consisting of combustion gases coming from the burner 15 (after having exchanged heat with the exchanger 10) and of a given quantity of air coming from a bypass opening 22 located in a fume collecting case 18A arranged in the upper part of the combustion chamber 18; the mixture of combustion gases and air is expelled through a flue 23; in particular, in the embodiment shown in the single figure, the flue 23 is concentric to said atmosphere air sucking duct (DCT);
∘ an expansion tank 30, which can accommodate the expansion of the water flowing in the hydraulic distribution heating system 17 every time its temperature increases;
∘ a temperature sensor 31 on the delivery branch 17A of the hydraulic distribution system, said sensor being designed to measure the temperature values reached by the water in the delivery branch.

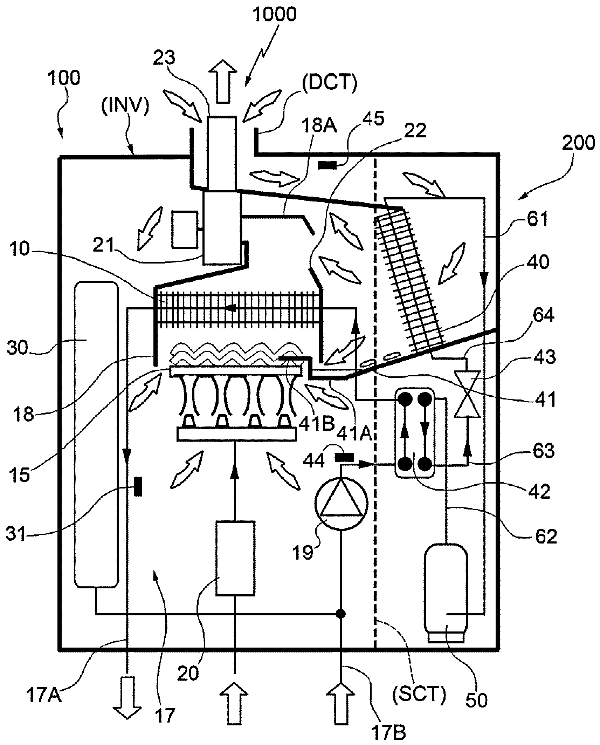

Not shown in the diagram of figure 1, but equally present in the boiler 100 are also:
∘ an adjustment and control electronic board; said board allows the system to operate based on the logics described in the following points;
∘ a control panel containing the electronic board, which allows the user to access/turn off the entire apparatus 1000, besides adjusting the heating temperature and controlling the set parameters.

It should be pointed out that, compared to a traditional boiler, this boiler 100 is characterized in that it has the following particularities:
∘ the large bypass opening 22 located in the fume collecting case 18A; said bypass opening 22 being sufficient to let through all the air that is not necessary for the combustion process, but is necessary to dilute the combustion products coming from the burner 15 and to supply energy to an evaporator 40 of the heat pump 200 (see below);
∘ a fan 21 with a flow rate that is definitely greater than the one needed for the mere combustion of the gas supplied to the boiler under conditions of maximum thermal flow rate; therefore, the fan 21 is capable of sucking, next to the combustion products, a quantity of air that is at least 1.5 times larger than the one needed for the sole combustion of the fuel at the maximum power of the boiler 100;
∘ a vaporizing device 41 for the possible condensate coming from the evaporator 40 of the heat pump 20 (see below); actually, it is a component made of a metal material with a high heat conductivity; the vaporizing device 41 comprises a collecting tank 41A for the possible condensate coming from the evaporator 40 and an appendage 41B, which is located inside the combustion chamber 18, close to burner 15 or even partly immersed in the flame of the burner 15, so as to absorb heat in a quantity that is sufficient to always keep the temperature of the tank 41A above 100°C, even when the burner 15 works at the minimum power, and, hence, so as to cause the condensate to evaporate in all operating conditions. Compared to a conventional boiler, the fact of discharging into the flue 23 combustion gases (fumes) that are highly diluted by the quantity of air exceeding the one strictly needed for the the combustion allows you to obtain a dew point that is significantly lower than the reference dew point for this type of boiler, thus avoiding the formation of condensate in the flue 23.

As a matter of fact, it is known from technical literature that, taking into account - for example - natural gas as a fuel gas to be used in a traditional conventional boiler, you can have CO2 values in the combustion products ranging from 6% at a maximum power to 2% at a minimum power, with dew point values ranging from 48°C to 30°C, respectively; on the other hand, in the apparatus 1000 according to the invention, you can have CO2 values ranging from 2.5% at a maximum power to 1.0% at a minimum power, with dew point values ranging from 30°C to 15°C.

Leaving aside, just for now, the presence of the heat pump 200, the operation of the boiler 100 is described below.

Every time the boiler 100 is operated (namely, every time the electric consent to the operation thereof is given), the pump 19 starts working, the sensor 31 detects a temperature below the one set by the user through the control panel (which is not shown in the diagram), the adjustment board of the boiler (which is not shown in the diagram) gives consent to the turning on of the burner 15 by operating the fan 21, opening the safety shutter of the gas valve 20 and providing the electric discharge (with a device which is not shown in the diagram) firing the air/gas mixture reaching the burner 15.

Simultaneously, the safety system (which is not shown in this diagram) checks whether the burner 15 was actually turned on and whether there is a flame and, as a consequence, maintains the consent to the opening of the safety shutter of the gas valve 20.

At this point the adjustment board of the boiler 100 operates as a feedback closed-loop regulation system, which means that, as long as the temperature detected by the sensor 31 is below the set point value established by the user, the fan 21 operates at its maximum number of revolutions and the gas valve 20 keeps the gas open at the maximum flow rate allowed.

As the set point temperature gets closer, the adjustment board decreases the requested power, thus decreasing the gas flow rate provided by the gas valve 20 and, hence, the delivered power, so as to the keep the temperature of the water in the delivery branch 17A at the value set on the control panel.

As the power delivered by the burner 100 decreases, the speed of the fan 21 remains constant or decreases to an extent that is less than proportional the quantity of gas.

In such a way, even in the presence of very small delivered powers, thanks to the high dilution of the fumes, they do not reach the dew point which, as already mentioned above, decreases as the degrees of dilution of the fumes increases.

If the request for energy of the heating system is so small that it exceeds the minimum value of power that can be delivered by the boiler 100, the temperature of the water going back to the boiler through a return branch 17B progressively increases, as does the temperature of the water in the delivery branch 17A.

When the temperature difference between the value detected by sensor 31 and the set value exceeds a predetermined value by some degrees Celsius, the control electronics of the boiler determines the closing of the gas valve 20 and the stopping of the fan 21, with consequent turning off of the burner 15.

The cycle described above is repeated after some time, once the sensor 31 has detected a temperature that lies below the set point by a predetermined value.

During all the time in which the burner 15 is on, the vaporizing device 41 (for the condensate contained in the air) is brought to temperatures exceeding 100°C.

The heat pump 200 is an air-water heat pump and helps heat the water of the hydraulic distribution system 17 starting from the heat available in the air coming from the outside.

In the heat pump 200 there are the following devices:
∘ a compressor 50, which compresses and increases the temperature of a refrigerant gas;
∘ the aforesaid evaporator 40, which is nothing other than a heat exchanger where the refrigerant gas evaporates shifting from the liquid phase to the gaseous phase absorbing heat from the air coming from the outside through the suction duct (DCT);
∘ a condenser 42, i.e. a further heat exchanger where the refrigerant gas condenses shifting from the gaseous phase to the liquid phase and releasing heat to the water that flows back to the heating system 19;
∘ a thermal expansion valve 43, which determines the pressure drop which is needed and sufficient to keep the pressure of the refrigerant gas at the desired values for the evaporator 40 and the condenser 42;
∘ the fan 21 (the same one of the boiler 100), which determines the flow rate of the air flowing through the evaporator 40;
∘ a temperature sensor 44, which is designed to measure the temperatures reached by the water flowing in the return branch 17B;
∘ a temperature sensor 45, which is designed to measure the temperatures reached by the air flowing in from the suction duct (DCT) and sent to the evaporator 40.

Compared to a traditional heat pump, the heat pump 200 is characterized in that it has the following features:
- the fan 21 is not located close to the evaporator 40, but it is arranged on the fume collecting case 18A, downstream of the exchanger 10 and of the bypass 22, though fulfilling the exact same function;
- the condenser 42 is arranged in series relative to the boiler primary exchanger 10 and upstream thereof so as to exchange heat with water at the smallest temperature of the entire system, in order to support the exchange of heat with the refrigerant gas,

Below you can find a description of the operation of the entire apparatus 100.

As it is known, the efficiency of traditional air-water heat pumps is strongly influenced by the temperature difference existing between the source of energy available to the evaporator 40 (namely, the air on the outside) and the water coming from the return branch 17B, which flows through the condenser 42.

In particular, it is known that, with temperatures of the air on the outside below 5°C, there is an evaporation of the refrigerant gas below 0° with consequent formation of hoarfrost and ice on the evaporator 40 due to the humidity contained in the air, with consequent need for defrosting cycles and large losses of efficiency of the heat pump.

It is known, indeed, that in these conditions the energy efficiency of the heat pump (ratio between the energy delivered by the heat pump and the primary energy coming from a fossil source needed to produce the power requested by the heat pump) is smaller than or - at the most - comparable with the one obtained by a boiler of the type described above.

Furthermore, it is known that with condensing temperatures exceeding 50°C, again, the energy efficiency of the heat pump is smaller than or - at the most - comparable with the one obtained by a boiler of the type described above.

Therefore, in order to give a positive contribution to the overall efficiency of the apparatus, the heat pump 200 will be operated only in the presence of temperatures of the air on the outside exceeding 5°C and of temperatures of the water returning from the system below 50°C.

For reasons that will be better explained in the description below, the heat pump 200 will be started only together with the boiler 100.

Therefore, we will only examine the situation in which the air on the outside has a temperatures higher than or equal to 5°C and the water returning from the system has a temperatures lower than or equal to 50°C.

On the outside of this operating range the heat pump 200 can be operated, but it will not provide the benefits that can be obtained on the inside of the operating range indicated above.

Upon turning on of the apparatus 1000, for example in the morning, the following steps are carried out.
∘ the pump 19 starts;
∘ the temperature sensor 31 measures a temperature value below the one set by the user through the control panel; the adjustment board activates the starting of the boiler 100;
∘ if the temperature of the air on the outside exceeds the limit value deemed to be convenient for the operation of the heat pump 200, namely 5°C, the heat pump 200 is started, as well;
∘ leaving aside the operation of the boiler 100, which has already been described above, the heat collected from the air through the evaporator 40 is transferred to the refrigerant fluid of the heat pump 200, thus allowing it to evaporate;
∘ the pressure and temperature of the refrigerant fluid are increased by the compressor 50 and the refrigerant fluid is brought to the condenser 42, where it exchanges heat with the air coming from the system through the condenser 42, thus condensing;
∘ then, the refrigerant fluid flows through the thermal expansion valve 43 (or through a thermal expansion capillary tube fulfilling the same function), decreasing its pressure and temperature and vaporizing in order to then go on with its thermodynamic cycle in the way already described above;
∘ simultaneously with the operation of the heat pump 200, the boiler 100 is activated, which works according to the cycle described above adding the part of energy requested by the system and not made available by the heat pump.

To sum up, the refrigerant fluid, starting from the evaporator 40, at first flows in a first duct 61 connecting the compressor 50 to the evaporator 40 itself; after having flown through the compressor 50, the refrigerant fluid then flows in a second duct 62 and goes through the condenser 42; once out of the condenser 42, the refrigerant fluid flows towards the thermal expansion valve 43 through a third duct 63, in order to the close the circuit in the evaporator 40, flowing in a fourth and last duct 64.

However, if the humidity and temperature conditions of the air on the outside are such that, when it comes into contact with the evaporator 40 where the refrigerant gas evaporates at temperatures ranging from 0°C to 3°C, the air goes below the dew point, you have the formation of condensate on the evaporator 40 and the percolation of the condensate into the collecting tank 41A of the vaporizing device 41, whose temperature always exceeds 100°C with consequent quick vaporization of the condensate itself.

It should be pointed out that the latent heat owned by the humidity of the air - at first - is taken away from the air through the evaporator 42 and - then - is given back to the air through the vaporizing device 41 with a sum energy balance equal to zero.

Therefore, the positive contribution of the heat pump 200 to the energy balance of the apparatus 1000 is only the one deriving from the absorption of the sensitive heat owned by the air sucked in by the apparatus itself.

The main advantages of the apparatus according to the invention are the following:
- from the point of view of performances, the simultaneous operation of the boiler and of the heat pump, in the range of temperatures of the air and of the water returning from system indicated above, allows you to obtain a seasonal efficiency greater than or equal to 86%, values that are typical for a condensing boiler and are much greater than the ones that cab obtained with the sole conventional boiler;
- from the building point of view, the use of one single fan and of one single pump for two devices reduces manufacturing costs and simplifies the construction of the entire apparatus;
- the mixing of air and fumes enables the use of one single duct for draining the air and of the fumes both of the boiler and of the heat pump; these two features allow manufacturers to easily obtain a one-piece apparatus where the two devices, the boiler and the heat pump, are located inside the same casing, which also contains all the functional, adjusting and controlling devices of the apparatus;
- from the point of view of installation, despite having obtained an apparatus with seasonal efficiencies that are typical for condensing boilers, there is no need to provide a condensate draining device; furthermore, given the high degree of dilution of the combustion products, there are no more risks that the fumes can condensate in the flue downstream of the apparatus.

## Claims

1. A high-efficiency heating apparatus (1000) for hot water systems; the apparatus comprising:
- a non-condensing boiler (100); and
- an air-water heat pump (200);
said boiler (100) and said heat pump (200) comprising ventilation means (21), which are designed to fulfil the double function of extracting the combustion products from said boiler (100) and of extracting air from said heat pump (200) ;
the apparatus being **characterized in that** it comprises a vaporizing device (41), which is able to collect and vaporize the condensate formed in the area of an evaporator (40) belonging to said heat pump (200), said vaporizing device (41) comprising a collecting tank (41A) for the condensate coming from said evaporator (40), and an appendage (41B), which is located inside a combustion chamber (18) of said boiler (100).

2. Heating apparatus (1000) according to Claim 1, **characterized in that** said appendage (41B) is close to a burner (15) of said boiler (100).

3. Heating apparatus (1000) according to Claim 2, **characterized in that** said appendage (41B) is at least partly immersed in the flame of said burner (15), so as to absorb heat to an extent that is sufficient to always keep the temperature of said tank (41A) above 100°C.

4. Heating apparatus (1000) according to anyone of the preceding Claims, **characterized in that** it comprises a single casing (INV) containing, on the inside, said boiler (100), said heat pump (200), said ventilation means (21) and water pumping means (19), which are shared by said boiler (100) and by said heat pump (200).

5. Heating apparatus (1000) according to Claim 4, **characterized in that** in a combustion product collecting case (18A) belonging to said boiler (100) there is a bypass opening (22), which is sufficient to let through a quantity of air that is greater than the one needed for the sole fuel combustion at the maximum power of said boiler (100); said quantity of air being sufficient to dilute the combustion products to an extent that is such as to reduce their dew point below 30°C.

6. Heating apparatus (1000) according to Claim 5, **characterized in that** said quantity of air is at least 1.5 times greater than the one needed for the sole fuel combustion at the maximum power of said boiler (100).

7. Heating apparatus (1000) according to anyone of the Claims from 4 to 6, **characterized in that** it has one single air intake pipe (DCT) and one single draining pipe (23) for the combustion products.

8. Heating apparatus (1000) according to Claim 7, **characterized in that** said single air intake pipe (DCT) and said single draining pipe (23) for the combustion products are concentric to one another.

9. Heating apparatus (1000) according to anyone of the preceding Claims, **characterized in that** a condenser (42) of said heat pump (200) is placed upstream of a primary heat exchanger (10) of said boiler (100).

## Patentansprüche

1. Hocheffizientes Heizungsgerät (1000) für Heißwassersysteme; wobei das Gerät aufweist:
- einen nichtkondensierenden Heizkessel (100); und
- eine Luft-Wasser-Wärmepumpe (200);
wobei der Heizkessel (100) und die Wärmepumpe (200) Lüftungseinrichtungen (21) aufweisen, die dazu eingerichtet sind, die doppelte Funktion eines Entfernens von Verbrennungsprodukten aus dem Heizkessel (100) und eines Entfernens von Luft aus der Wärmepumpe (200) zu erfüllen;
wobei das Gerät **dadurch gekennzeichnet ist, dass** es eine Verdampfungsvorrichtung (41) aufweist, die dazu eingerichtet ist, das Kondensat, das in dem Bereich eines Verdampfers (40) der Wärmepumpe (200) entsteht, zu sammeln und zu verdampfen, wobei die Verdampfungsvorrichtung (41) einen Sammelbehälter (41A) für das aus dem Verdampfer (40) kommende Kondensat und einen im Inneren einer Verbrennungskammer (18) des Heizkessels (100) angeordneten Fortsatz (41B) aufweist.

2. Heizungsgerät (1000) nach Anspruch 1, **dadurch gekennzeichnet, dass** der Fortsatz (41B) in der Nähe eines Brenners (15) des Heizkessels (100) angeordnet ist.

3. Heizungsgerät (1000) nach Anspruch 2, **dadurch gekennzeichnet, dass** der Fortsatz (41B) mindestens teilweise in der Flamme des Brenners (15) eingetaucht ist, um Wärme in einem Maße zu absorbieren, das ausreichend ist, um die Temperatur des Behälters (41A) immer oberhalb von 100°C zu halten.

4. Heizungsgerät (1000) nach einem der vorstehenden Ansprüche, **dadurch gekennzeichnet, dass** es ein einziges Gehäuse (INV) aufweist, das im Inneren den Heizkessel (100), die Wärmepumpe (200), die Lüftungseinrichtungen (21) und Wasserfördermittel (19), die von dem Heizkessel (100) und der Wärmepumpe (200) gemeinsam verwendet werden, aufnimmt.

5. Heizungsgerät (1000) nach Anspruch 4, **dadurch gekennzeichnet, dass** in einem Verbrennungsproduktsammelgehäuse (18A) des Heizkessels (100) eine Umgehungsöffnung (22) angeordnet ist, die ausreichend ist, um eine Luftmenge durchzulassen, die größer ist als diejenige, die für die alleinige Kraftstoffverbrennung bei der maximalen Leistung des Heizkessels (100) notwendig ist; wobei die Luftmenge ausreichend ist, um die Verbrennungsprodukte in einem solchen Maße zu verdünnen, dass ihr Taupunkt auf unter 30°C reduziert wird.

6. Heizungsgerät (1000) nach Anspruch 5, **dadurch gekennzeichnet, dass** die Luftmenge mindestens 1,5 Mal größer ist als diejenige, die für die alleinige Kraftstoffverbrennung bei der maximalen Leistung des Heizkessels (100) notwendig ist.

7. Heizungsgerät (1000) nach einem der Ansprüche 4 bis 6, **dadurch gekennzeichnet, dass** es ein einziges Lufteinlassrohr (DCT) und ein einziges Auslassrohr (23) für die Verbrennungsprodukte aufweist.

8. Heizungsgerät (1000) nach Anspruch 7, **dadurch gekennzeichnet, dass** das einzige Lufteinlassrohr (DCT) und das einzige Auslassrohr (23) für die Verbrennungsprodukte konzentrisch zueinander sind.

9. Heizungsgerät (1000) nach einem der vorstehenden Ansprüche, **dadurch gekennzeichnet, dass** ein Kondensator (42) der Wärmepumpe (200) stromauf von einem primären Wärmetauscher (10) des Heizkessels (100) angeordnet ist.

## Revendications

1. Appareil de chauffage à rendement élevé (1000) pour des systèmes d'eau chaude ; l'appareil comprenant :
- une chaudière sans condensation (100) ; et
- une pompe à chaleur air-eau (200) ;
ladite chaudière (100) et ladite pompe à chaleur (200) comprenant des moyens de ventilation (21), qui sont conçus pour remplir la double fonction d'extraction des produits de combustion depuis ladite chaudière (100) et d'extraction d'air depuis ladite pompe à chaleur (200) ;
l'appareil étant **caractérisé en ce qu'**il comprend un dispositif de vaporisation (41), qui est capable de collecter et de vaporiser le condensat formé dans la zone d'un évaporateur (40) appartenant à ladite pompe à chaleur (200), ledit dispositif de vaporisation (41) comprenant un réservoir collecteur (41A) pour le condensat provenant dudit évaporateur (40), et un appendice (41B), qui est situé à l'intérieur d'une chambre de combustion (18) de ladite chaudière (100).

2. Appareil de chauffage (1000) selon la revendication 1, **caractérisé en ce que** ledit appendice (41B) est près d'un brûleur (15) de ladite chaudière (100).

3. Appareil de chauffage (1000) selon la revendication 2, **caractérisé en ce que** ledit appendice (41B) est immergé au moins partiellement dans la flamme dudit brûleur (15), de façon à absorber de la chaleur jusqu'à un point qui est suffisant pour conserver en permanence la température dudit réservoir (41A) au-dessus de 100 °C.

4. Appareil de chauffage (1000) selon l'une quelconque des revendications précédentes, **caractérisé en ce qu'**il comprend une carrosserie (INV) unique contenant, sur l'intérieur, ladite chaudière (100), ladite pompe à chaleur (200), lesdits moyens de ventilation (21) et des moyens de pompage d'eau (19), qui sont partagés par ladite chaudière (100) et par ladite pompe à chaleur (200).

5. Appareil de chauffage (1000) selon la revendication 4, **caractérisé en ce que**, dans un boîtier collecteur de produits de combustion (18A) appartenant à ladite chaudière (100) se trouve une ouverture de dérivation (22), qui est suffisante pour laisser entrer une quantité d'air qui est supérieure à celle nécessaire pour la seule combustion de combustible à la puissance maximale de ladite chaudière (100) ; ladite quantité d'air étant suffisante pour diluer les produits de combustion jusqu'à un point de nature à réduire leur point de rosée en dessous de 30 °C.

6. Appareil de chauffage (1000) selon la revendication 5, **caractérisé en ce que** ladite quantité d'air est supérieure d'au moins 1,5 fois celle nécessaire pour la seule combustion de combustible à la puissance maximale de ladite chaudière (100).

7. Appareil de chauffage (1000) selon l'une quelconque des revendications 4 à 6, **caractérisé en ce qu'**il comporte un tuyau d'admission d'air (DCT) unique et un tuyau d'évacuation (23) unique pour les produits de combustion.

8. Appareil de chauffage (1000) selon la revendication 7, **caractérisé en ce que** ledit tuyau d'admission d'air (DCT) unique et ledit tuyau d'évacuation (23) unique pour les produits de combustion sont concentriques l'un par rapport à l'autre.

9. Appareil de chauffage (1000) selon l'une quelconque des revendications précédentes, **caractérisé en ce qu'**un condenseur (42) de ladite pompe à chaleur (200) est placé en amont d'un échangeur de chaleur primaire (10) de ladite chaudière (100).
